# EUROPÄISCHE PATENTSCHRIFT

(11) **EP 1 742 516 B1**
(45) Veröffentlichungstag und Bekanntmachung des Hinweises auf die Patenterteilung: **05.06.2013**
(21) Anmeldenummer: 06013523.3
(22) Anmeldetag: 29.06.2006
(51) Int. Cl.: H05B 41/28, H05B 41/288

(54) **Schaltungsanordnung und Verfahren zum Betrieb mindestens einer elektrischen Lampe**
Device and method for operating at least one lamp
Dispositif et méthode pour alimenter au moins une lampe

(30) Priorität: 07.07.2005 DE 202005010720 U
(43) Veröffentlichungstag der Anmeldung: 10.01.2007
(73) Patentinhaber: OSRAM GmbH, 80807 München (DE)
(72) Erfinder: Busse, Olaf, 80686 München (DE); Heckmann, Markus, 81539 München (DE); Lecheler, Reinhard, 86633 Neuburg/Donau (DE); Lechner, Alfons, 86558 Hohenwart (DE); Mayer, Siegfried, 85452 Moosinning (DE); Pollischansky, Thomas, 86391 Stadtbergen (DE); Rudolph, Bernd, 85659 Forstern (DE); Schemmel, Bernhard, 82234 Wessling (DE); Schmidtmann, Kay, Dr., 81827 München (DE); Schmitt, Harald, 80689 München (DE); Siegmund, Thomas, Dr., 83624 Otterfing (DE); Storm, Arwed, 85221 Dachau (DE)
(74) Vertreter: Raiser, Franz

(56) Entgegenhaltungen:
- GB-A- 2 311 629
- US-A1- 2009 174 440
- ZHANG Y F ET AL: "EMI reduction of power supplies by Bi-Frequency modulation", APPLIED POWER ELECTRONICS CONFERENCE AND EXPOSITION, 1994. APEC '94. C ONFERENCE PROCEEDINGS 1994., NINTH ANNUAL ORLANDO, FL, USA 13-17 FEB. 1994, NEW YORK, NY, USA,IEEE, 13. Februar 1994 (1994-02-13), Seiten 601-607, XP010118515, DOI: DOI:10.1109/APEC.1994.316343 ISBN: 978-0-7803-1456-6

## Beschreibung

### Technisches Gebiet

Die vorliegende Erfindung betrifft eine Schaltungsanordnung zum Betrieb mindestens einer elektrischen Lampe mit einer Ansteuerschaltung, die eingangsseitig mindestens einen Anschluss für eine Netzspannung und ausgangsseitig mindestens einen Anschluss für die mindestens eine elektrische Lampe aufweist, wobei die Ansteuerschaltung eine Steuerungseinheit und einen Hochsetzsteller mit einer Hochsetzstellerdrossel und einem Schalter aufweist. -Sie betrifft überdies ein Betriebsverfahren für mindestens eine elektrische Lampe an einer derartigen Schaltungsanordnung.

### Stand der Technik

In derartigen Schaltungsanordnungen, in denen der Hochsetzsteller der Netzstromoberwellenkorrektur (Power Factor Correction = PFC) dient, wird der Hochsetzsteller üblicherweise im so genannten Transition-Mode betrieben. Unter Transition-Mode wird hierbei ein Betrieb verstanden, bei dem die Schaltvorgänge eines Schalters im Hochsetzsteller zu Zeitpunkten vorgenommen werden, zu denen der Strom durch die Hochsetzstellerdrossel gleich Null ist, d. h. der Schalter des Hochsetzstellers wird bei einer fallenden Flanke des Stroms durch die Hochsetzstellerdrossel dann geschlossen, wenn der Strom durch die Hochsetzstellerdrossel den Wert Null erreicht. Wird dieser Hochsetzsteller mit DC-Spannung betrieben, hat zur Folge, dass der Hochsetzsteller mit einer festen Frequenz läuft und damit die Funkstörpeaks bei der sich einstellenden Betriebsfrequenz und deren Harmonischen sehr schmal und sehr hoch sind, was einen großen Aufwand für die Funkentstörung bedeutet. Um die vorgegebenen Funkstörgrenzwerte einzuhalten, müssen daher die Funkstörfilter ausreichend groß dimensioniert werden und/oder die Betriebsfrequenz so niedrig gewählt werden, dass möglichst viele Harmonische im Bereich bis 150 kHz liegen, da dort gemäß der maßgeblichen Norm höhere Grenzwerte gelten. Eine weitere Möglichkeit, die Einhaltung der Funkstörgrenzwerte zu erreichen, besteht darin, die Betriebsfrequenz des Hochsetzstellers zu wobbeln, beln, was jedoch zu einer starken Modulation des aus dem Netz entnommenen Stromes (hohe RMS-Werte) führen würde. Zudem ist die mögliche Frequenzmodulation durch Wobbeln im Vergleich zur Bandbreite der hierbei verwendeten Funkstör-Messfilter der verwendeten Funkstörmesseinrichtungen so klein, dass nur eine geringe Verbesserung im Funkstörspektrum erreicht werden kann. Die übliche Bandbreite derartiger Funkstör-Messfilter beträgt 9 kHz bei einer Einschwingzeit von 1s.

In der Schrift GB 2311629 (Wong) ist ein Schaltregler beschrieben, dessen Schaltfrequenz abhängig vom Laststrom dadurch geregelt wird, dass bei kleinem Laststrom die Aus-Zeit des Schalters verlängert wird, während die Ein-Zeit konstant bleibt.

In der Schrift Zhang Y F et al.:"EMI reduction of power supplies by Bi-Frequency modulation", Applied Power Electronics Conference and Exposition 1994, APEC '94 Conference Proceedings, USA 1994, New York, USA, IEEE, 13.Feb. 1994, pp 601-607, ist eine Bi-Frequency Regelung für Konverter zur Verbreiterung des Emissionsspektrums beschrieben.

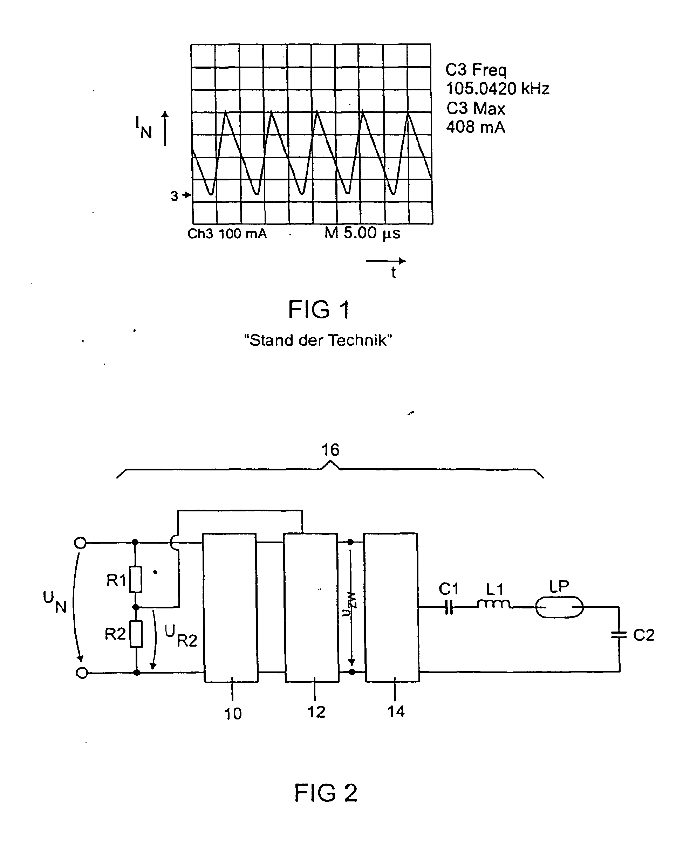

Figur 1 zeigt den zeitlichen Verlauf des Stroms durch die Hochsetzstellerdrossel bei einer bekannten Schaltungsanordnung, die im Transition-Mode betrieben wird. Die Betriebsfrequenz beträgt 105,0420 kHz, die maximale Amplitude des Stroms beträgt 408 mA.

### Darstellung der Erfindung

Die Aufgabe der vorliegenden Erfindung besteht deshalb darin, eine eingangs genannte Schaltungsanordnung bzw. ein eingangs genanntes Betriebsverfahren derart weiterzubilden, dass eine Funkentstörung mit geringerem Aufwand ermöglicht wird.

Diese Aufgabe wird gelöst durch eine Schaltungsanordnung mit den Merkmalen von Patentanspruch 1 bzw. durch ein Betriebsverfahren mit den Merkmalen von Patentanspruch 8.

Die Erfindung basiert grundsätzlich auf der Idee, dass sich ein geringerer Aufwand für die Funkentstörung ergibt, wenn das Frequenzspektrum durch geeignete Maßnahmen verbreitert wird. Erfindungsgemäß erfolgt dies dadurch, dass die Steuerungseinheit ausgelegt ist, den Hochsetzsteller in einem Discontinuous-Mode zu betreiben, bei dem der Strom durch die Hochsetzstellerdrossel Lücken aufweist, wobei die Dauer dieser Lücken variiert wird. Unter Discontinuous-Mode ist eine Betriebsart zu verstehen, bei der im Gegensatz zum Transition-Mode nicht bereits zu dem Zeitpunkt, zu dem der Strom durch die Hochsetzstellerdrossel den Wert Null erreicht, der Schalter wieder geschlossen wird, sondern eine gewisse Zeitdauer abgewartet wird, wobei diese Zeitdauer variiert wird. Wenngleich der Strom zwischen dem Zeitpunkt des Erreichens des Werts Null und dem erneuten Schließen des Schalters des Hochsetzstellers in Folge elektrischer Ruckwirkungen innerhalb der Schaltungsanordnung nicht fortwährend auf dem Wert Null bleibt, wird diese Zeitdauer dennoch als "Stromlücke", d. h. stromlose Phase, bezeichnet. Durch geeignete Wahl der Dauer der Lücken kann eine Bandbreite der Betriebsfrequenz des Hochsetzstellers erreicht werden, die weit größer ist als die Bandbreite des Funkstör-Messfilters. Damit fallen weniger Funkstörungen in das Fenster der vorgegebenen Bandbreite und ermöglichen daher niedrigere und damit leichter zu entstörende Pegel. Je größer die Lücke ist, desto niedriger ist die niedrigste Frequenz des sich ergebenden Spektrums. Im Gegensatz zum Stand der Technik, bei dem sich ein nahezu diskretes Funkstörspektrum ergeben hat, ist das Funkstörspektrum der Erfindung stark verbreitert. Durch Änderung der Dauer der Lücken, insbesondere durch kontinuierliche Änderung der Dauer der Lücken, kann somit der Hochsetzsteller über ein breites Frequenzband betrieben werden. Durch die erfindungsgemäße Maßnahme wird die Verwendung höherer, prinzipiell schwerer zu entstörender Betriebsfrequenzen ermöglicht und damit können kleinere Bauformen für die Hochsetzstellerdrossel verwendet und in Folge davon Kosteneinsparungen erzielt werden.

Bevorzugt wird eine Umschaltung von Transition-Mode in den Discontinuous-Mode vorgenommen, wenn die Netzspannung eine DC-Spannung ist. '

Insofern ist bei einer bevorzugten Ausführungsform die Steuerungseinheit ausgelegt zu erkennen, ob am Anschluss für die Netzspannung eine AC-Spannung und/oder eine DC-Spannung anliegt, wobei die Steuerungseinheit weiterhin ausgelegt ist, bei Erkennen des Anliegens einer AC-Spannung den Hochsetzsteller in einem Transition-Mode zu betreiben und/oder bei Erkennen des Anliegens einer DC-Spannung den Hochsetzsteller in dem Discontinuous-Mode mit Variation der Stromlücken zu betreiben. Damit ergeben sich im Hinblick auf Funkstörungen optimale Betriebsarten des Hochsetzstellers sowohl bei Betrieb aus einer AC-Quelle als auch aus einer DC-Quelle. Um diese Erkennung vorzunehmen, ist bei einer bevorzugten Ausführungsform die Steuerungseinheit ausgelegt, einen Nulldurchgang des Signals am Anschluss für die Netzspannung zu erkennen und zur Ansteuerung des Hochsetzstelrers entsprechend auszuwerten. Zu diesem Zweck kann beispielsweise ein hochohmiger Spannungsteiler Verwendung finden.

Bevorzugt beträgt die Dauer der Lücken zwischen 0,1 µs und 20 µs, noch bevorzugter zwischen 1 µs und 5 µs. Die Dauer der Lücken wird bevorzugt mit einer Wobbelfrequenz zwischen 0,1 Hz und 100 kHz, noch bevorzugter zwischen 1 Hz und 10 Hz variiert. Dies ist besonders vorteilhaft, da die Einschwingzeit üblicher Funkstör-Messfilter etwa 1 s beträgt.

Eine besonders bevorzugte Ausführungsform zeichnet sich dadurch aus, dass der Hochsetzsteller weiterhin eine Kapazität umfasst, wobei an der Kapazität als Ausgangssignal des Hochsetzstellers eine Zwischenkreisspannung bereitstellbar ist, wobei die Steuereinheit weiterhin ausgelegt ist, die Einschaltzeit des Schalters so festzulegen, dass die Zwischenkreisspannung innerhalb vorgegebener Grenzen liegt, insbesondere konstant ist. Diese bevorzugte Ausführungsform bietet den Vorteil, dass dadurch eine Erhöhung der Welligkeit in dem mit der Zwischenkreisspannung betriebenen, so genannten Zwischenkreis zuverlässig verhindert wird.

Weitere vorteilhafte Ausfiihrungsformen ergeben sich aus den Unteransprüchen.

Die im Vorhergehenden mit Bezug auf die erfindungsgemäße Schaltungsanordnung beschriebenen bevorzugten Ausführungsformen und Vorteile gelten entsprechend für das erfindungsgemäße Betriebsverfahren.

### Kurze Beschreibung der Zeichnungen

Im Nachfolgenden wird nunmehr ein Ausführungsbeispiel einer erfindungsgemäßen Schaltungsanordnung mit Bezug auf die beigefügten Zeichnungen näher beschrieben. Es zeigen:
- Figur 1: den zeitlichen Verlauf des Stroms durch die Hochsetzstellerdrossel bei einer aus dem Stand der Technik bekannten Schaltungsanordnung bei Betrieb im Transition-Mode;
- Figur 2: in schematischer Darstellung den Aufbau einer erfindungsgemäßen Schaltungsanordnung;
- Figur 3: in detaillierterer Darstellung einen Ausschnitt aus Figur 2; und
- Figur 4: den zeitlichen Verlauf des Stroms durch die Hochsetzstellerdrossel bei einer erfindungsgemäßen Schaltungsanordnung bei Betrieb im Discontinuous-Mode.

### Bevorzugte Ausführung der Erfindung

Figur 2 zeigt in schematischer Darstellung ein Ausführungsbeispiel einer erfindungsgemäßen Schaltungsanordnung. Dabei wird eine Netzspannung U_{N}, bei der es sich um eine AC-Spannung oder eine DC-Spannung, beispielsweise aus einem Notstromaggregat, handeln kann, in bekannter Weise über einen Gleichrichter 10, eine Vorrichtung zur Netzstromoberwellenkorrektur 12, die an ihrem Ausgang die so genannte Zwischenkreisspannung U_{zw} bereitstellt, und einen Wechselrichter 14 an einen Lastkreis gekoppelt, wobei der Lastkreis in diesem Ausführungsbeispiel einen Koppelkondensator C1, eine Induktivität L1, die elektrische Lampe LP und einen Resonanzkondensator C2 umfasst. Erfindungsgemäß ist ein Spannungsteiler mit Widerständen R1 und R2 vorgesehen, wobei das am Widerstand R2 abgegriffene Signal der Vorrichtung zur Netzstromoberwellenkorrektur 12 zugeführt wird. Die Bauelemente beginnend vom Spannungsteiler R1, R2 bis zur Induktivität L1 bilden eine Ansteuerschaltung 16 für die Lampe LP.

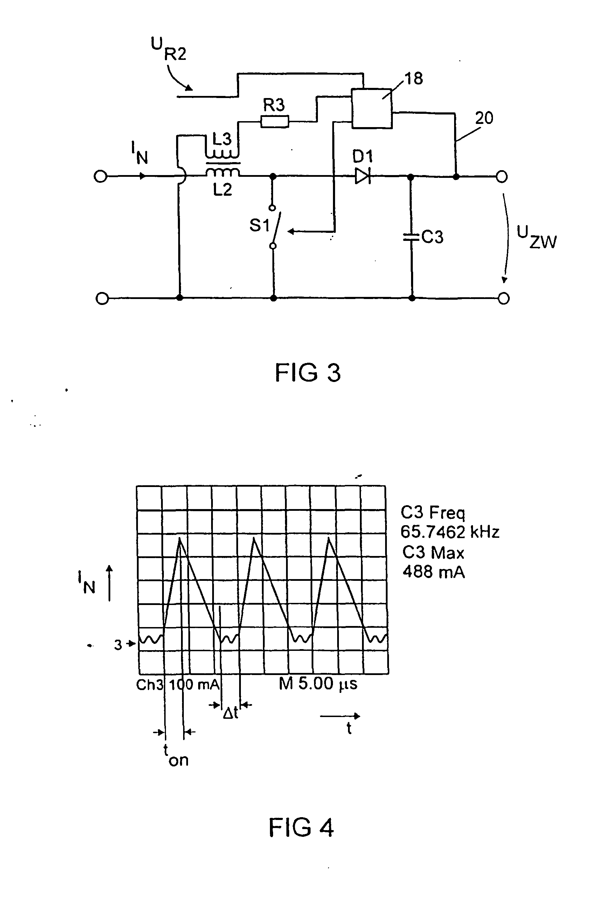

Eine detailliertere Darstellung der Vorrichtung zur Netzstromoberwellenkorrektur 12 ist in Figur 3 zu sehen. Sie zeigt einen Hochsetzsteller, der eine Hochsetzstellerdrossel L2, einen Schalter S1, eine Diode D1 und einen Kondensator C3 umfasst. Die Vorrichtung zur Netzstromoberwellenkorrektur 12 umfasst weiterhin eine Steuerungseinheit 18. Dieser wird die am Widerstand R2 abfallende Spannung U_{R2} zugeführt. Die Steuerungseinheit 18 prüft, ob die Spannung U_{R2} einen Nulldurchgang aufweist oder nicht. Falls sie einen Nulldurchgang aufweist, schaltet sie in einen Betrieb "Transition-Mode". Stellt die Steuerungseinheit 18 in der Spannung U_{R2} keinen Nulldurchgang fest, schaltet sie in einen Betrieb "Discontinuous-Mode". Im Transition-Mode wird bei einem Absinken des Stroms IN durch die Hochsetzstellerdrossel L2 auf Null der Schalter S1 sofort wieder geschlossen, während im Discontinuous-Mode eine bestimmte Zeitdauer Δt abgewartet wird. Diese Zeitdauer Δt wird als "Stromlücke" bezeichnet und wird erfindungsgemäß durch die Steuereinheit 18 variiert. Der Zeitpunkt eines Nullwerts des Stroms IN wird durch eine Zusatzwicklung L3 auf der Hochsetzstellerdrossel L2 ermittelt, deren Signal über einen Widerstand R3 der Steuerungseinheit 18 zugeführt wird. Über eine Leitung 20 wird der Steuerungseinheit 18 überdies der Wert der Spannung U_{ZW} am Kondensator C3 zugeführt, wobei die Steuerungseinheit 18 ausgelegt ist, die Einschaltzeit tₒₙ des Schalters S1 so festzulegen, dass die Zwischenkreisspannung U_{ZW} möglichst konstant ist. Erfindungsgemäß wird die Dauer der Lücken Δt des Stroms I_{N} durch die Hochsetzstellerdrossel L2 zwischen 0,1 µs und 20 µs variiert. Dabei wird eine Wobbelfrequenz verwendet, die zwischen 0,1 Hz und 100 kHz beträgt.

Figur 4 zeigt den zeitlichen Verlauf des Stroms IN durch die Hochsetzstellerdrossel L2 bei einer erfindungsgemäßen Schaltungsanordnung. Zu erkennen ist, dass nach dem erstmaligen Erreichen des Werts Null eine Zeitdauer △t gewartet wird, bis der Schalter S1 des Hochsetzstellers wieder geschlossen wird, was in einer ansteigenden Flanke des Stroms IN resultiert. Vorliegend beträgt die Stromlücke Δt etwa 25 % der Periodendauer. Im Vergleich mit Figur 1 ist zu erkennen, dass sich die Betriebsfrequenz auf 65,7462 kHz reduziert hat, was einer Frequenzabsenkung von knapp 40 % entspricht. Im Gegenzug hierzu hat sich der Spitzenstrom um nur ca. 20 % auf 488 mA erhöht.

## Patentansprüche

1. Schaltungsanordnung zum Betrieb mindestens einer elektrischen Lampe (LP) mit einer Ansteuerschaltung (16), die eingangsseitig mindestens einen Anschluss für eine Netzspannung (U_{N}) und ausgangsseitig mindestens einen Anschluss für die mindestens eine elektrische Lampe (LP) aufweist;
wobei die Ansteuerschaltung (16) eine Steuerungseinheit (18) und einen Hochsetzsteller mit einer Hochsetzstellerdrossel (L2) und einem Schalter (S1) aufweist,
**dadurch gekennzeichnet,**
**dass** die Steuerungseinheit (18) ausgelegt ist, den Hochsetzsteller in einem Diskontinuous-Mode zu betreiben, bei dem der Strom (IN) durch die Hochsetzstellerdrossel (L2) Lücken aufweist, wobei die Dauer (Δt) dieser Lücken variiert wird und wobei durch geeignete Wahl der Dauer der Lücken eine größere Bandbreite der Betriebsfrequenz des Hochsetzstellers erreicht wird.

2. Schaltungsanordnung nach Anspruch 1,
**dadurch gekennzeichnet,**
**dass** der Hochsetzsteller ausgelegt ist, eine Netzstromoberwellenkomektur (12) zu bewirken.

3. Schaltungsanordnung nach einem der Ansprüche 1 oder 2,
**dadurch gekennzeichnet,**
**dass** die Steuerungseinheit (18) ausgelegt ist zu erkennen, ob am Anschluss für die Netzspannung (U_{N}) eine AC-Spannung und/oder eine DC-Spannung anliegt, wobei die Steuerungseinheit (18) weiterhin ausgelegt ist, bei Erkennen des Anliegens einer AC-Spannung (U_{N}) den Hochsetzsteller in einem Transition-Mode zu betreiben und/oder bei Erkennen des Anliegens einer DC-Spannung (U_{N}) den Hochsetzsteller in dem Discontinuous-Mode mit Variation der Dauer (Δt) der Stromlücken zu betreiben.

4. Schaltungsanordnung nach Anspruch 3,
**dadurch gekennzeichnet,**
**dass** die Steuerungseinheit (18) ausgelegt ist, einen Nulldurchgang des Signals am Anschluss für die Netzspannung (U_{N}) zu erkennen und zur Ansteuerung des Hochsetzstellers auszuwerten.

5. Schaltungsanordnung nach einem der vorhergehenden Ansprüche,
**dadurch gekennzeichnet,**
**dass** die Dauer der Lücken zwischen 0,1 µs und 20 µs, bevorzugt zwischen 1 µs und 5 µs, beträgt.

6. Schaltungsanordnung nach einem der vorhergehenden Ansprüche,
**dadurch gekennzeichnet,**
**dass** die Dauer (Δt) der Lücken mit einer Wobbelfrequenz zwischen 0,1 Hz und 100 kHz, bevorzugt zwischen 1 Hz und 10 Hz, variiert wird.

7. Schaltungsanordnung nach einem der vorhergehenden Ansprüche,
**dadurch gekennzeichnet,**
**dass** der Hochsetzsteller weiterhin eine Kapazität (C3) umfasst, wobei an der Kapazität (C3) als Ausgangssignal des Hochsetzstellers eine Zwischenkreisspannung (U_{ZW}) bereitstellbar ist, wobei die Steuerungseinheit (18) weiterhin ausgelegt ist, die Einschaltzeit (tₒₙ) des Schalters (S1) so festzulegen, dass die Zwischenkreisspannung (U_{zw}) innerhalb vorgebbarer Grenzen liegt, insbesondere konstant ist.

8. Betriebsverfahren für mindestens eine elektrische Lampe (LP) an einer Schaltungsanordnung mit einer Ansteuerschaltung (16), die eingangsseitig mindestens einen Anschluss für eine Netzspannung (U_{N}) und ausgangsseitig mindestens einen Anschluss für die mindestens eine elektrische Lampe (LP) aufweist;
wobei die Ansteuerschaltung (16) eine Steuerungseinheit (18) und einen Hochsetzsteller mit einer Hochsetzstellerdrossel (L2) und einem Schalter (S1) aufweist,
**dadurch gekennzeichnet,**
**dass** die Steuerungseinheit (18) den Hochsetzsteller in einem Diskontinuous-Mode betreibt, bei dem der Strom (I_{N}) durch die Hochsetzstellerdrossel (L2) Lücken aufweist, wobei die Dauer (Δt) dieser Lücken variiert wird und wobei durch geeignete Wahl der Dauer der Lücken eine größere Bandbreite der Betriebsfrequenz des Hochsetzstellers erreicht wird.

## Claims

1. Circuit arrangement for operating at least one electric lamp (LP) having a drive circuit (16), which has at least one terminal for a system voltage (U_{N}) on the input side and at least one terminal for the at least one electric lamp (LP) on the output side;
the drive circuit (16) having a control unit (18) and a step-up converter having a step-up converter inductor (L2) and a switch (S1),
**characterized**
**in that** the control unit (18) is designed to operate the step-up converter in a discontinuous mode, in which the current (IN) through the step-up converter inductor (L2) has gaps, the duration (Δt) of these gaps being varied, and, by suitable selection of the duration of the gaps, a greater bandwidth for the operating frequency of the step-up converter being achieved.

2. Circuit arrangement according to Claim 1,
**characterized**
**in that** the step-up converter is designed to bring about a system current harmonic correction (12).

3. Circuit arrangement according to either of Claims 1 and 2,
**characterized**
**in that** the control unit (18) is designed to detect whether an AC voltage and/or a DC voltage is present at the terminal for the system voltage (U_{N}), the control unit (18) furthermore being designed to operate the step-up converter in a transition mode when the presence of an AC voltage (U_{N}) is detected and/or to operate the step-up converter in the discontinuous mode, with a variation in the duration (Δt) of the gaps in the current when the presence of a DC voltage (U_{N}) is detected.

4. Circuit arrangement according to Claim 3,
**characterized**
**in that** the control unit (18) is designed to detect a zero crossing of the signal at the terminal for the system voltage (U_{N}) and to evaluate it for the purpose of driving the step-up converter.

5. Circuit arrangement according to one of the preceding claims,
**characterized**
**in that** the duration of the gaps is between 0.1 µs and 20 µs, preferably between 1 µs and 5 µs.

6. Circuit arrangement according to one of the preceding claims,
**characterized**
**in that** the duration (Δt) of the gaps is varied at a sweep frequency of between 0.1 Hz and 100 kHz, preferably of between 1 Hz and 10 Hz.

7. Circuit arrangement according to one of the preceding claims,
**characterized**
**in that** the step-up converter furthermore comprises a capacitance (C3), it being possible for an intermediate circuit voltage (U_{ZW}) to be provided at the capacitance (C3) as the output signal of the step-up converter, the control unit (18) furthermore being designed to determine the switch-on time (tₒₙ) of the switch (S1) such that the intermediate circuit voltage (U_{ZW}) is within predeterminable limits, in particular is constant.

8. Operating method for at least one electric lamp (LP) using a circuit arrangement having a drive circuit (16), which has at least one terminal for a system voltage (U_{N}) on the input side and at least one terminal for the at least one electric lamp (LP) on the output side;
the drive circuit (16) having a control unit (18) and a step-up converter having a step-converter inductor (L2) and a switch (S1),
**characterized**
**in that** the control unit (18) operates the step-up converter in a discontinuous mode, in which the current (IN) through the step-up converter inductor (L2) has gaps, the duration (Δt) of these gaps being varied, and, by suitable selection of the duration of the gaps, a greater bandwidth for the operating frequency of the step-up converter being achieved.

## Revendications

1. Montage pour faire fonctionner au moins une lampe électrique (LP), comprenant un circuit de commande (16) lequel présente, côté entrée, au moins une borne pour une tension de secteur (UN), et côté sortie, au moins une borne pour la ou les lampes électriques (LP) ;
le circuit de commande (16) comprenant une unité de commande (18) et un convertisseur élévateur avec une inductance (L2) et un interrupteur (S1),
**caractérisé en ce que**
l'unité de commande (18) est conçue pour faire fonctionner le convertisseur élévateur selon un mode discontinu dans lequel le courant (I_{N}) présente des interruptions du fait de l'inductance (L2), étant précisé que l'on fait varier la durée (Δt) de ces interruptions et que l'on obtient par un choix approprié de la durée des interruptions une bande passante plus large de la fréquence de fonctionnement du convertisseur élévateur.

2. Montage selon la revendication 1,
**caractérisé en ce que**
le convertisseur élévateur est conçu pour réaliser une correction d'harmoniques du courant de secteur (12).

3. Montage selon l'une des revendications 1 ou 2,
**caractérisé en ce que**
l'unité de commande (18) est conçue pour détecter si une tension alternative et/ou une tension continue est appliquée à la borne pour la tension de secteur (UN), l'unité de commande (18) étant conçue en outre pour faire fonctionner le convertisseur élévateur selon un mode de transition lorsqu'il détecte qu'une tension alternative (UN)est appliquée, et/ou pour faire fonctionner le convertisseur élévateur selon le mode discontinu avec variation de la durée (Δt) des interruptions de courant lorsqu'il détecte qu'une tension continue (U_{N}) est appliquée.

4. Montage selon la revendication 3,
**caractérisé en ce que**
l'unité de commande (18) est conçue pour détecter, et exploiter pour la commande du convertisseur élévateur, un passage par zéro du signal à la borne pour la tension de secteur (U_{N}).

5. Montage selon l'une des revendications précédentes,
**caractérisé en ce que**
la durée des interruptions est comprise entre 0,1 µs et 20 µs, de préférence entre 1 µs et 5 µs.

6. Montage selon l'une des revendications précédentes,
**caractérisé en ce que**
l'on fait varier la durée (Δt) des interruptions avec une fréquence de vobulation comprise entre 0,1 Hz et 100 kHz, de préférence entre 1 Hz et 10 Hz.

7. Montage selon l'une des revendications précédentes,
**caractérisé en ce que**
le convertisseur élévateur comprend en outre une capacité (C3), au niveau de cette capacité (C3) pouvant être fournie comme signal de sortie du convertisseur élévateur une tension de circuit intermédiaire (U_{zw}), l'unité de commande (18) étant conçue en outre pour fixer le temps de mise en marche (tₒₙ) de l'interrupteur (S1) de façon à ce que ladite tension de circuit intermédiaire (U_{zw}) soit dans des limites prédéfinissables, et de préférence constante.

8. Procédé de fonctionnement d'au moins une lampe électrique (LP) dans un montage comprenant un circuit de commande (16) lequel présente, côté entrée, au moins une borne pour une tension de secteur (UN), et côté sortie, au moins une borne pour la ou les lampes électriques (LP) ;
le circuit de commande (16) comprenant une unité de commande (18) et un convertisseur élévateur avec une inductance (L2) et un interrupteur (S1),
**caractérisé en ce que**
l'unité de commande (18) fait fonctionner le convertisseur élévateur selon un mode discontinu dans lequel le courant (I_{N}) présente des interruptions du fait de l'inductance (L2), étant précisé que l'on fait varier la durée (Δt) de ces interruptions et que l'on obtient par un choix approprié de la durée des interruptions une bande passante plus large de la fréquence de fonctionnement du convertisseur élévateur.
